(19) Europäisches Patentamt
European Patent Office
Office européen des brevets

(11) Veröffentlichungsnummer: **0 115 809**
**B1**

(12) # EUROPÄISCHE PATENTSCHRIFT

(45) Veröffentlichungstag der Patentschrift: **19.03.86**

(51) Int. Cl.⁴: **C 07 F 5/04,** C 10 M 107/52 // C07C93/04

(21) Anmeldenummer: **84100686.9**

(22) Anmeldetag: **24.01.84**

(54) **Stickstoffhaltige Borsäureester und deren Verwendung in hydraulischen Flüssigkeiten.**

(30) Priorität: **29.01.83 DE 3302970**

(43) Veröffentlichungstag der Anmeldung: **15.08.84 Patentblatt 84/33**

(45) Bekanntmachung des Hinweises auf die Patenterteilung: **19.03.86 Patentblatt 86/12**

(84) Benannte Vertragsstaaten: **DE FR GB IT NL SE**

(56) Entgegenhaltungen: **US - A - 3 729 497**

(73) Patentinhaber: **BASF Aktiengesellschaft, Carl-Bosch-Strasse 38, D-6700 Ludwigshafen (DE)**

(72) Erfinder: **Nohe, Heinz, Dr., Ruppertsberger Strasse 11, D-6701 Meckenheim (DE)**
Erfinder: **Loeffler, Albert, Sohlstrasse 57, D-6701 Maxdorf (DE)**
Erfinder: **Stechl, Hanns-Helge, Dr., Max-Slevogt-Strasse 14, D-6710 Frankenthal (DE)**
Erfinder: **Liebold, Gert, Dr., Hundert Morgen 37, D-6803 Edingen-Neckarhausen (DE)**
Erfinder: **Pfitzner, Klaus, Dr., Liebermannstrasse 6, D-6700 Ludwigshafen (DE)**

**EP 0 115 809 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die vorliegende Erfindung betrifft neue stickstoffhaltige Borsäureester auf Basis oxalkylierter primärer und/oder sekundärer Amino(poly)glykolalkylether sowie deren Verwendung in hydraulischen Flüssigkeiten.

An hydraulische Flüssigkeiten, insbesondere an Bremsflüssigkeiten für Fahrzeuge, werden bezüglich ihrer chemischen und physikalischen Eigenschaften hohe Ansprüche gestellt.

Nach den zur Zeit gültigen Standardvorschriften (U.S. Federal Motor Vehicle Safety Standard 116, Society of Automotive Engineers Standard J 1703) müssen Bremsflüssigkeiten insbesondere einen hohen Kochpunkt (Kp) sowie Naßkochpunkt (NKp) besitzen und eine Viskosität aufweisen, die sich innerhalb eines großen Temperaturbereichs nur geringfügig ändert. Die entsprechenden Anforderungen für DOT 4 (bzw. DOT 5) lauten: Kp 230° C (260° C), N Kp 155° C (180° C), Viskosität bei -40° C 1800 $mm^2/sec$ (900 $mm^2/sec$).

Zusätzlich müssen auch die weiteren Anforderungen der o.g. Vorschriften erfüllt werden, betreffend beispielsweise die chemische und thermische Stabilität, das Korrosionsverhalten gegenüber Metallen oder das Quellungsverhalten gegenüber polymeren Stoffen (z.B. Kautschuk).

Aus diesen Gründen bestehen Bremsflüssigkeiten üblicherweise aus mehreren Komponenten z.B. Glykolethern als Grundbestandteil, Polyglykole als Schmiermittel, Inhibitoren (beispielsweise Amine) für den Korrosionsschutz sowie Antioxidantien.

Bremsflüssigkeiten, die die Anforderungen gemäß DOT 4 erfüllen sollen, enthalten häufig einen Zusatz von Borsäureestern, um den erforderlichen Wert des Naßkochpunkts sicherzustellen (DE-OSen 17 68 933 und 29 01 835).

Die handelsüblichen Bremsflüssigkeiten, die insbesondere Methyltriglykolorthoborat enthalten, sind noch verbesserungsbedürftig; z.B. erfüllen sie die erforderlichen Spezifikationen und geforderten Eigenschaften wie Naßkochpunkt, Viskosität und Verdampfungsverlust nur bei einem verhältnismäßig hohen Gehalt an Bor und/oder durch Zugabe von beträchtlichen Mengen anderer Hilfsmittel.

Nach dem Vorschlag der DE-OS 28 04 535, EP-PS 23 700 und der JP-OS 133 491/80 sollen dazu Borsäureester eingesetzt werden, die gleichzeitig derivatisierte Aminogruppen enthalten. Beim Einsatz in Bremsflüssigkeiten zeigt sich aber, daß mit den dort genannten Produkten nicht alle Kennzahlen der Spezifikation gleichzeitig erfüllt werden.

Aufgabe der Erfindung war es nun neue stickstoffhaltige Borsäureester herzustellen, die die für hydraulische Flüssigkeiten, insbesondere Bremsflüssigkeiten, geforderten Eigenschaften, vor allem auch hinsichtlich der Viskosität, erfüllen.

Es wurde gefunden, daß mit stickstoffhaltigen Borsäureester der allgemeinen Formel I

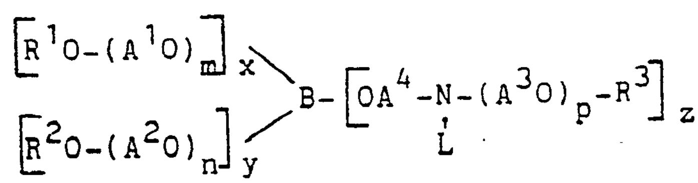

(I),

in der

$R^1$ und $R^2$ unabhängig voneinander eine Alkylgruppe mit 1 bis 4 Kohlenstoffatomen,

$R^3$ eine Alkylgruppe mit 2 bis 6 Kohlenstoffatomen,

m, n und p unabhängig voneinander eine ganze Zahl von 1 bis 8,

$A^1$ eine 1,2-Alkylengruppe mit 2 bis 4 Kohlenstoffatomen, die für $m > 1$ gleich oder verschieden ist,

$A^2$ eine 1,2-Alkylengruppe mit 2 bis 4 Kohlenstoffatomen, die für $n > 1$ gleich oder verschieden ist,

$A^3$ eine 1,2-Alkylengruppe mit 2 bis 4 Kohlenstoffatomen, die für $p > 1$ gleich oder verschieden ist,

$A^4$ eine 1,2-Alkylengruppe mit 2 bis 4 Kohlenstoffatomen,

L ein Wasserstoffatom, den Rest $A^4$-OH, der gegebenenfalls mit Orthoborsäure esterartig verknüpft sein kann, oder den Rest $(A^3O)_p - R^3$,

x, y und z einen beliebigen, von 0 verschiedenen Wert bis 2,95,

x und y außerdem den Wert 0 und

$x + y + z = 3$ bedeuten, bzw. deren Gemischen diese Aufgabe vorteilhaft gelöst wird.

Die neuen Produkte werden erhalten durch Umsetzung in beliebiger Reihenfolge von 1 Mol Orthoborsäure mit

A) 0,05 bis 1,5 Mol eines oxalkylierten primären und/oder sekundären Amino(poly)glykolalkylethers mit 1 oder 2 veresterbaren Hydroxylgruppen je Molekül,

B) bis zu 2,95 Mol eines (Poly)glykolalkylethers und

C) bis zu 1 Mol einer Glykols oder dessen Oligomer

bis sich kein Wasser mehr abscheidet und unter Entfernung des Wassers, mit der Maßgabe, daß die Molmengen von A), B) und C) unter Berücksichtigung ihrer Hydroxylgruppenzahl einen vollständigen Ester der Borsäure bilden können. Ähnliche Borsäureester, die sich allerdings von anderen Aminokomponenten ableiten, sind Gegenstand der DE-OS 3 132 372 und US-A-3 729 497.

Als primäre bzw. sekundäre Amino(poly)glykolalkylether können Verbindungen der allgemeinen Struktur II bzw. III eingesetzt werden.

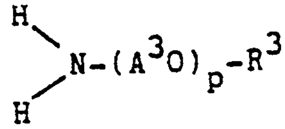 (II)

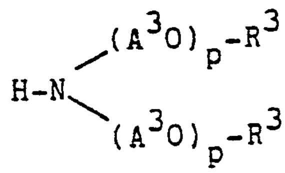 (III)

Sie werden vorteilhaft nach an sich bekannten Methoden, z.B. durch Umsetzung von (Poly)glykolalkylethern mit Ammoniak in Gegenwart von Wasserstoff, hergestellt, so daß darauf nicht weiter einzugehen ist.

Die Oxalkylierung der Aminkomponenten II und III erfolgt ebenfalls nach an sich bekannten Methoden mit Ethylenoxid, 1,2-Propylenoxid oder einem entsprechenden Butylenoxid und führt zu Komponenten der allgemeinen Struktur IV, V und VI

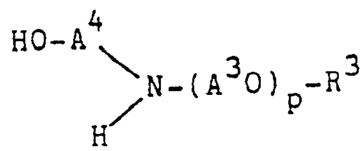 (IV)

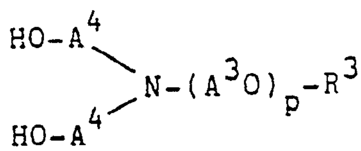 (V)

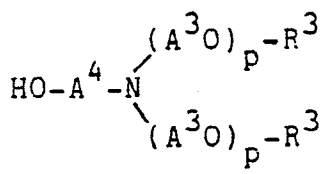 (VI)

(Poly)glykolalkylether sind Monoether von Ethylen-, Propylen- oder Butylenglykol bzw. deren einheitlichen oder gemischten Oligomeren und einem einwertigen Alkanol mit 1 bis 4 Kohlenstoffatomen, wobei Methyltriglykol bevorzugt ist.

Die Borsäureester können ferner unter Mitverwendung von - im allgemeinen untergeordneten Mengen - einfacher unveretherter Glykole oder deren Oligomeren hergestellt sein. Bevorzugt ist die Verwendung geringer Mengen von Diethylenglykol, Triethylenglykol oder gemischter Ethylen-/Propylen-glykol-oligomerer, die auch im Handel erhältlich sind.

Die Veresterung der Orthoborsäure wird in an sich bekannter Weise durchgaführt, indem man z.B. in die auf 90°C erhitzte Mischung der Alkohole Orthoborsäure unter Rühren einträgt und unter vermindertem Druck die Temperatur allmählich steigert, bis das entstandene Wasser weitgehend abdestilliert ist. Dies ist in der Regel nach 3 bis 10 Stunden und nach Erreichen einer Temperatur von 110 bis 190°C der Fall.

Es ist nicht erforderlich, vor der Veresterung das Oxalkylierungsprodukt A) zu isolieren.

Bei diesen Borestern handelt es sich in der Regel um keine chemisch einheitlichen Verbindungen, sondern um Gemische, wie dies bei der Umsetzung mehrfunktioneller Verbindungen untereinander der Erfahrung entspricht.

Unabhängig von der Beschreibung der Ester durch ihre Ausgangsstoffe und das diese verbindende Herstellverfahren lassen sich jedoch Borester mit beispielsweise folgenden Strukturelementen als Bestandteile solcher Gemische erwarten:

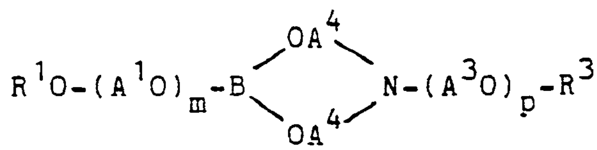

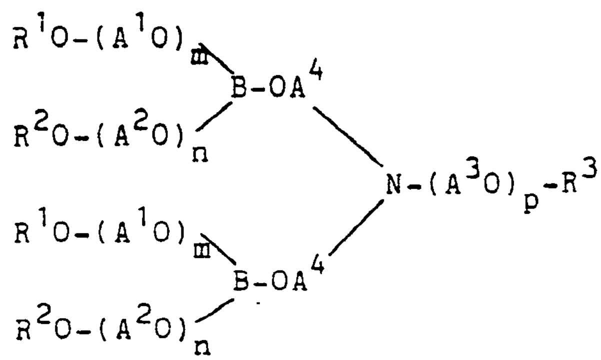

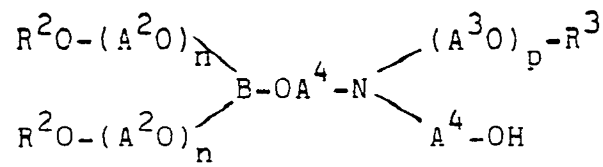

Je nach Mischungsverhältnis der Ausgangsstoffe A) bis C), d.h. im Verhältnis untereinander und zur Borsäure, erhält man demnach Verbindungen mit 2 oder mehr Mol Borsäure je Mol in geringerer Menge neben solchen, die z.B. nur 1 Mol Borsäure je Mol enthalten.

Zur Herstellung der erfindungsgemäßen hydraulischen Flüssigkeiten, die den Bedingungen der Spezifikation genügen, werden die stickstoffhaltigen Borsäureester mit Polyglykolalkylethern und Polyglykolen gemischt.

Eine geeignete Bremsflüssigkeit besteht z.B. aus
5 bis 80 Gew.% erfindungsgemäßen Borsäureestern
20 bis 95 Gew.% Polyglykolalkylethern und
bis zu 50 Gew.% Polyglykolen.

Die neuen Borsäureester zeichnen sich durch ihre niedere Viskosität aus, wodurch sie besonders zur Formulierung von DOT 5 Bremsflüssigkeiten geeignet sind. Eine vorteilhafte Wirkung der neuen Borsäureester besteht auch darin, daß infolge ihres relativ hohen Stickstoffgehalts geringere Mengen bzw. überhaupt kein zusätzliches Amin für die Inhibierung und als Alkalireserve erforderlich ist. Auch die Zugabe von Dialkylethern entfällt.

Folgende Beispiele sollen die Erfindung näher erläutern:

**Herstellung der Ausgangsverbindungen**

**Oxalkyliertes Amin 1 (Amin 1)**

490 g primäres Methyltriglykolamin wurden unter Rühren, in Gegenwart von 1 g Wasser und bei einer Temperatur von 75 bis 150° C, innerhalb von 8 Stunden mit 264 g Ethylenoxid umgesetzt. Man erhielt 750 g (99,5 % der berechneten Menge) an Amin 1.

**Oxalkyliertes Amin 2 (Amin 2)**

Analog Amin 1 wurden 1000 g aminiertes Butyltriglykol (70 Gew.% primäres und 30 Gew.% sekundäres Amin) mit 334 g Ethylenoxid umgesetzt. Man erhielt 1 361 g (98,5 % der berechneten Menge) an Amin 2.

**Oxalkyliertes Amin 3 (Amin 3)**

500 g aminiertes Methyltriglykol techn. (61 Gew.% primäres Amin und 31 Gew.% sekundäres Amin) wurden in Gegenwart von 1 g Kalilauge (50 Gew.%) mit 186,4 g Ethylenoxid umgesetzt. Man erhielt 688,5 g (berechnete Menge) an Amin 3.

**Oxelkyliertes Amin 4 (Amin 4)**

1 000 g aminiertes Ethyldiglykol techn. (70 Gew.% primäres Amin und 26 Gew.% sekundäres Amin) wurden in Gegenwart von 2 g Kalilauge (50 Gew.%) mit 507,6 g Ethylenoxid umgesetzt. Man erhielt 1 511 g (berechnete Menge) an Amin 4.

**Oxalkyliertes Amin 5 (Amin 5)**

Analog Amin 4 wurden 500 g aminiertes Ethyldiglykol-Gemisch mit 415,4 g 1,2-Butenoxid umgesetzt. Man erhielt 917 g (99,9 % der berechneten Menge) an Amin 5.

**Oxalkyliertes Amin 6 (Amin 6)**

1 000 g aminiertes Methyltetraglykol (61,7 Gew.% primäres Amin und 38,3 Gew.% sekundäres Amin) wurden mit 334,4 g Ethylenoxid umgesetzt. Man erhielt 1 334 g (99,8 % der berechneten Menge) an Amin 6.

**Oxalkyliertes Amin 7 (Amin 7)**

500 g aminiertes Methyltetraglykol (75,9 Gew.% primäres Amin sowie 24,1 Gew.% sekundäres Amin) wurden mit 243,6 g 1,2-Propylenoxid umgesetzt. Man erhielt 745 g (99,9 % der berechneten Menge) an Amin 7.

**Borester 1 (Ester 1)**

Zu 589 g Amin 2 und 1 148 g Methyltriglykol wurden unter Rühren bei Raumtemperatur 217 g Orthoborsäure gegeben.

Während man den Druck auf 2 mbar verminderte und die Temperatur allmählich auf 170°C steigerte, wurde gleichzeitig das entstehende Wasser abdestilliert. Die Reaktion war nach 11 Stunden beendet und man erhielt 1 764 g (entsprechend der berechneten Menge) an Ester 1.

Analog zu den Ester 1 wurden folgende Borester hergestellt:

| Borester | alkyliertes Amin | (Poly)glykolalkylether | Orthoborsäure | Ausbeute (% der ber. Menge) |
|---|---|---|---|---|
| Ester 2 | Amin 2 263,7 g | Methyltriglykol 1 230 g | 186 g | 1 513 g (99,7) |
| Ester 3 | Amin 1 125,5 g | Methyltriglykol 820 g | 124 g | 951 g (99) |
| Ester 4 | Amin 3 275,3 g | Methyltriglykol 557,6 g | 105,4 g | 837 g (98,9) |
| Ester 5 | Amin 4 216 g | Methyltriglykol 460 g + Methyltetraglykol-Gemisch 81 g | 102 g | 749 g (97,3) |
| Ester 6 | Amin 4 216 g | Methyltetraglykol (techn.) 686,4 g | 102 g | 904 g (98,8) |
| Ester 7 | Amin 5 262 g | Methyltriglykol 541 g | 102 g | 790 g (96,8) |
| Ester 8 | Amin 6 263,3 g | Methyltriglykol 492 g | 93 g | 767 g (100) |
| Ester 9 | Amin 7 133 g | Methyltriglykol 615 g | 93 g | 754 g (99,2) |

**Formulierung einer Bremsflüssigkeit**

a) 50 Gew.% Methyltriglykol 50 Gew.% Borester (jeweils Ester 1, 2 und 4)
b) 60 Gew.% Methyltriglykol 40 Gew.% Borester (jeweils Ester 3 und 5 bis 9).

<u>Tabelle</u>

Typische Eigenschaften der Bremsflüssigkeiten

| zur Formulierung verwendeter Borester | Kp [°C] | NKp SAE [°C] | pH SAE | V-40°C $mm^2/s$ | SBR-Quellung 72 h/120°C Vol.% | Boden ∅ | DP IRH.D | Oxidationsbeständigkeit 168 h/70°C Alu | GG |
|---|---|---|---|---|---|---|---|---|---|
| Ester 1 | 266 | 181 | 8,1 | 1 286 | + 9,69 | + 0,82 | - 7 | ± 0,00 | + 0,19 |
| Ester 2 | 267 | 182 | 7,9 | 814 | + 8,98 | + 0,75 | - 6 | - 0,01 | + 0,13 |
| Ester 4 | 262 | 171 | 8,7 | 1 080 | + 8,34 | + 0,65 | - 6 | Korrosionstest SAE: entspricht | |
| Ester 5 | 261 | 180 | 8,4 | 955 | + 7,07 | + 0,57 | - 7 | Korrosionstest SAE: entspricht | |

Zur Beurteilung des Kochpunkts (Kp) bzw. Naßkochpunktes (Nkp) und der Viskosität wurden nachstehende Borester abgemischt:

| zur Formulierung verwendeter Borester | Kp [°C] | Nkp [°C] | V-40°C [$mm^2/l$] |
|---|---|---|---|
| Ester 3 | 262 | 176 | 600 |
| Ester 6 | 268 | 171 | 1 000 |
| Ester 7 | 257 | 172 | 789 |
| Ester 8 | 259 | 173 | 1 110 |
| Ester 9 | 261 | 175 | 733 |

**Patentansprüche**

1. Stickstoffhaltige Borsäureester der allgemeinen Formel I

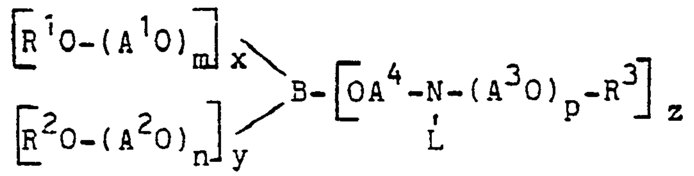

(I),

in der
$R^1$ und $R^2$ unabhängig voneinander eine Alkylgruppe mit 1 bis 4 Kohlenstoffatomen,
$R^3$ eine Alkylgruppe mit 2 bis 6 Kohlenstoffatomen,
m, n und p unabhängig voneinander eine ganze Zahl von 1 bis 8,
$A^1$ eine 1,2-Alkylengruppe mit 2 bis 4 Kohlenstoffatomen, die für $m > 1$ gleich oder verschieden ist,
$A^2$ eine 1,2-Alkylengruppe mit 2 bis 4 Kohlentoffatomen, die für $n > 1$ gleich oder verschieden ist,
$A^3$ eine 1,2-Alkylengruppe mit 2 bis 4 Kohlenstoffatomen, die für $p > 1$ gleich oder verschieden ist,
$A^4$ eine 1,2-Alkylengruppe mit 2 bis 4 Kohlenstoffatomen,
L ein Wasserstoffatom, den Rest $A^4$-OH, der gegebenenfalls mit Ortho- boratomsäure esterartig verknüpft sein kann, oder den Rest $(A^3O)_p$-$R^3$,
x, y und z einen beliebigen, von 0 verschiedenen Wert bis 2,95,
x und y außerdem den Wert 0 und
$x + y + z = 3$ bedeuten, bzw. deren Gemische, erhältlich durch Umsetzung in beliebiger Reihenfolge von 1 Mol Orthoborsäure mit
A) 0,05 bis 1,5 Mol eines oxalkylierten primären und/oder sekundären Amino(poly)glykolalkylethers mit 1 oder 2 verestarbaren Hydroxylgruppen je Molekül,
B) bis zu 2,95 Mol eines (Poly)glykolalkylethers und
C) bis zu 1 Mol eines Glykols oder dessen Oligomer bis sich kein Wasser mehr abscheidet und unter Entfernung des Wassers, mit der Maßgabe, daß die Molmengen von A), B) und C) unter Berücksichtigung ihrer Hydroxylgruppenzahl einen vollständigen Ester der Borsäure bilden können.

2. Hydraulische Flüssigkeit, enthaltend 1 bis 80 Gew.% mindestens eines Borsäureesters gemäß Anspruch 1.

**Claims**

1. Nitrogen-containing boric acid esters of the general formula I

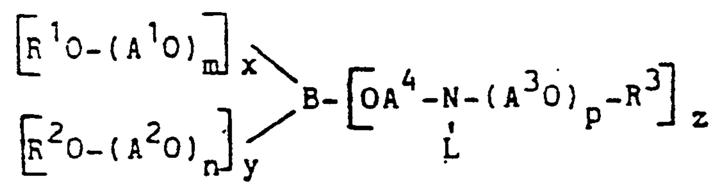

(I),

where
$R^1$ and $R^2$ independently of one another are alkyl of 1 to 4 carbon atoms,
$R^3$ is alkyl of 2 to 6 carbon atoms,
m, n and p independently of one another are an integer from 1 to 8,
$A^1$ is 1,2-alkylene of 2 to 4 carbon atoms, the groups being identical or different when $m > 1$,
$A^2$ is 1,2-alkylene of 2 to 4 carbon atoms, the groups being identical or different when $n > 1$,
$A^3$ is 1,2-alkylene of 2 to 4 carbon atoms, the groups being identical or different when $p > 1$,
$A^4$ is 1,2-alkylene of 2 to 4 carbon atoms,
L is hydrogen, $A^4$-OH which is optionally linked by ester bonds to orthoboric acid, or $(A^3O)_p$-$R^3$
x, y and z each denote any value up to 2.95 other than 0,
x and y also each denote 0, and
$x + y + z = 3$,
or mixtures thereof,
which are obtainable by reacting in any sequence 1 mole of orthoboric acid with
(A) 0.05 to 1.5 moles of an oxyalkylated primary and/or secondary amino(poly)glycol alkyl ether having 1 or 2

esterifiable hydroxyl groups per molecule,

(B) up to 2.95 moles of a (poly)glycol alkyl ether, and

(C) up to 1 mole of a glycol or its oligomer, until no further water is formed, while removing the water, with the proviso that the molar amounts of (A), (B) and (C), taking into account the number of their hydroxyl groups, can form a complete boric acid ester.

2. A hydraulic fluid containing from 1 to 80% by weight of at least one boric acid ester as claimed in claim 1.

## Revendications

1. Esters d'acide borique azotés de formule générale I

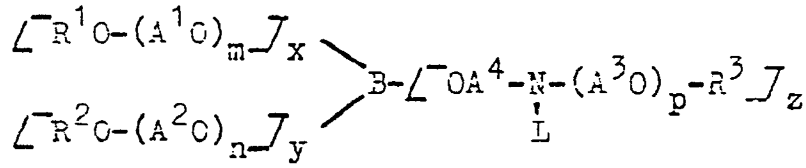

(I)

dans laquelle:

$R^1$ et $R^2$ représentent, indépendamment l'un de l'autre, un groupe alkyle à 1 - 4 atomes de carbone,

$R^3$ un groupe alkyle à 2 - 6 atomes de carbone,

m, n et p, indépendamment les uns des autres, un nombre entier de 1 à 8,

$A^1$ un groupe 1,2-alkylène à 2 - 4 atomes de carbone, pouvant être le même ou être différent dans le cas où m $>1$,

$A^2$ un groupe 1,2-alkylène à 2 - 4 atomes de carbone, pouvant être le même ou être différent dans le cas où n $> 1$,

$A^3$ un groupe 1,2-alkylène à 2 - 4 atomes de carbone, pouvant être le même ou être différent dans le cas où p $> 1$,

$A^4$ un groupe 1,2-alkyléne à 2 - 4 atomes de carbone,

L un atome d'hydrogène, le radical $A^4$-OH qui peut être lié à la manière d'un ester à l'acide orthoborique, ou le radical $(A^3O)_p-R^3$,

x, y et z ont chacun une valeur quelconque, différente de 0, jusqu'à 2,95,

x et y peuvent en outre avoir la valeur 0 et

$x + y + z = 3$,

ou mélanges de ces esters, préparables par réaction, dans n'importe quel ordre, de 1 mol d'acide orthoborique avec:

A) 0,05 à 1,5 mol d'un amino(poly)glycolalkyléther primaire et/ou secondaire oxalkylé comportant 1 ou 2 groupes hydroxyle estérifiables par molécule,

B) jusqu'à 2,95 mol d'un (poly)glycolalkyléther et

C) jusqu'à 1 mol d'un glycol ou d'un oligomère de celui-ci, jusqu'à ce qu'il ne se sépare plus d'eau et avec élimination de l'eau, avec cette condition que les quantités molaires de A), B) et C) puissent former, en considérant leur nombre de groupes hydroxyle, un ester complet de l'acide borique.

2. Fluide hydraulique, contenant 1 à 80 % en poids d'au moins un ester d'acide borique selon la revendication 1.